# EUROPÄISCHE PATENTANMELDUNG

(11) **EP 1 780 854 A1**
(43) Veröffentlichungstag der Anmeldung: **02.05.2007**
(21) Anmeldenummer: 06017950.4
(22) Anmeldetag: 29.08.2006
(51) Int. Cl.: H02G 15/04, H02G 3/06

(54) **Kabel- oder Schlauchverschraubung**

(30) Priorität: 26.10.2005 DE 102005051226
(71) Anmelder: Bimed Teknik A.S., 34900 Büyükcekmece Istanbul (TR)
(72) Erfinder: Albukrek, Yilmaz, Yesilköy, Istanbul (TR)
(74) Vertreter: Wörz, Volker Alfred

(57) **Zusammenfassung**

Die Erfindung betrifft eine Kabel- oder Schlauchverschraubung (1) umfassend einen mit einem Gehäuse (7) verbindbaren im wesentlichen hohlzylinderförmigen Stutzen (2) ein mit dem Stutzen (2) verschraubbares Druckelement (9) und ein Dichtungselement mit einem im wesentlichen hohlzylinderförmigen Dichtungsträger (2c) und einer an der Innenseite des Dichtungsträgers (2c) angeordneten Dichtung (10). Das Druckelement (9) wirkt auf das Dichtungselement im Sinne eines Anlegens der Dichtung (10) an ein durch die Verschraubung (1) hindurchgeführtes Kabel oder einen durch die Verschraubung (1) hindurchgeführten Schlauch ein. Um eine möglichst kurzbauende Verschraubung (1) zu schaffen, welche eine hohe Zugentlastung des Kabels bzw. des Schlauches erreichen kann, wird vorgeschlagen, dass der Dichtungsträger in den Stutzen (2) funktional integriert ist. Im Bereich eines ersten Endes (2a) des Stutzens (2) sind vorzugsweise mehrere um den Umfang des Stutzens (2) verteilte, sich in axialer Richtung bis an das erste Ende (2a) des Stutzens (2) erstreckenden Lamellen (2c) ausgebildet. Die Lamellen (2c) reichen vorzugsweise von dem ersten Ende (2a) des Stutzens (2) bis in ein an dem Stutzen (2) ausgebildetes erstes Außengewinde (3) hinein. Vorzugsweise sind an der Außenseite der Lamellen (2c) mindestens drei Gewindegänge des Außengewindes (3) ausgebildet.

## Beschreibung

Die vorliegende Erfindung betrifft eine Kabel- oder Schlauchverschraubung umfassend einen mit einem Gehäuse verbindbaren, im wesentlichen hohlzylinderförmigen Stutzen, ein mit dem Stutzen über ein erstes Außengewinde des Stutzens verschraubbares Druckelement und ein Dichtungselement mit einem im wesentlichen hohlzylinderförmigen Dichtungsträger und einer an der Innenseite des Trägers angeordneten Dichtung. Das Druckelement wirkt auf das Dichtungselement im Sinne eines Anlegens der Dichtung an ein durch die Verschraubung hindurch geführtes Kabel oder an einen durch die Verschraubung hindurchgeführten Schlauch ein.

Eine derartige Kabelverschraubung ist bspw. aus der DE 197 38 517 C1 bekannt. Die dort beschriebene Kabelverschraubung weist ein Schirmkontaktelement auf, welches zur Kontaktierung eines Schirm- oder Erdungskontakts eines durch die Kabelverschraubung hindurch geführten Erdungs- oder Abschirmkabels mit dem aus Metall gefertigten oder metallisierten Stutzen dient. Der Stutzen steht seinerseits in einem elektrisch leitenden Kontakt mit der metallischen oder metallisierten Wand eines Gehäuses bspw. eines elektrischen Schaltschrankes.

Um das durch die Kabelverschraubung hindurchgeführte Kabel gegen Zugbelastung zu sichern und die Durchführung in das Gehäuse abzudichten, ist in das Innere des Stutzens ein separates Dichtungselement eingesetzt, welches einen Dichtungsträger aus einem Kunststoff und eine an der Innenseite des Dichtungsträgers angeordnete Dichtung umfasst. Der Dichtungsträger weist im Bereich eines ersten Endes mehrere um den Umfang des Dichtungselements verteilte, sich in axialer Richtung bis an das erste Ende des Dichtungsträgers erstreckende Lamellen auf, die durch Aufschrauben des Druckelements auf den Stutzen radial nach innen gedrückt werden. Die sich radial nach innen bewegenden Lamellen üben ihrerseits einen Druck auf die innerhalb des Dichtungsträgers insbesondere im Bereich der Lamellen angeordnete Dichtung aus, die dadurch auf den Mantel des durch die Verschraubung hindurchgeführten Kabels gedrückt wird. Dadurch wird bei auf den Stutzen aufgeschraubtem und angezogenem Druckelement ein Verschieben des Kabels in axialer Richtung, also in Richtung der Längsachse der Kabelverschraubung, erschwert und die Kabeldurchführung in das Gehäuse abgedichtet.

Einen ähnlichen Aufbau bezüglich des Dichtungselements weist auch die aus der DE 103 49 781 A1 bekannte Kabelverschraubung auf. Auch dort ist das Dichtungselement als ein separates Bauteil, welches in den Stutzen eingesetzt bzw. auf diesen aufgesetzt wird, ausgebildet.

Aus dem Stand der Technik sind darüber hinaus auch Kabelverschraubungen aus Kunststoff bekannt, bei denen der Dichtungsträger integraler Bestandteil des Stutzens ist. Der Stutzen und das Dichtungselement sind jedoch funktional betrachtet zwei völlig separate Bauteile. Der Stutzen weist ein erstes Außengewinde zur Aufnahme des Druckelements zur Druckbeaufschlagung des Dichtungselements und häufig in axialer Richtung versetzt zu dem ersten Gewinde ein zweites Außengewinde zur Aufnahme einer Sicherungsmutter zur Befestigung des Stutzens in einer Gehäuseöffnung auf. Ebenfalls in axialer Richtung versetzt zu dem ersten Außengewinde und funktional völlig getrennt von dem ersten Außengewinde ist das Dichtungselement am Stutzen ausgebildet. Insgesamt ergibt sich also eine relativ großbauende, insbesondere in axialer Richtung recht lange Kabelverschraubung. Bei den bekannten Verschraubungen wird eine Zugentlastung zudem lediglich mittels Reibschluss zwischen Dichtung des Dichtungselements und dem Kabelmantel erzielt. Deshalb kann mit den bekannten Verschraubungen nur eine relativ geringe Zugentlastung erzielt werden.

Nachteilig bei den bekannten Kabelverschraubungen aus Metall und aus Kunststoff ist also, dass sie relativ großbauend ausgebildet sind und insbesondere eine relativ große Längserstreckung aufweisen. Zudem bestehen insbesondere die Verschraubungen aus Metall aus relativ vielen Einzelteilen, die alle separat gefertigt, während der Fertigung und des Transports zum Kunden und beim Kunden separat gehandhabt und bei der Installation der bekannten Kabelverschraubungen erst alle zusammengesetzt werden müssen. Dadurch ergibt sich ein relativ hoher Kosten- und Arbeitsaufwand für die Herstellung, die Handhabung und die Montage der bekannten Kabelverschraubungen.

Ausgehend von dem beschriebenen Stand der Technik liegt der vorliegenden Erfindung die Aufgabe zugrunde, eine möglichst einfach aufgebaute und kostengünstige Kabelverschraubung zu schaffen, welche darüber hinaus möglichst kleinbauend, insbesondere mit einer möglichst kurzen Längserstreckung, ausgebildet sein soll.

Zur Lösung dieser Aufgabe wird ausgehend von der Kabel-oder Schlauchverschraubung der eingangs genannten Art vorgeschlagen, dass der Dichtungsträger in das erste Außengewinde des Stutzens funktional integriert ist. Der Dichtungsträger erstreckt sich also von einem ersten Ende des Stutzens bis in das erste Außengewinde hinein. Der Dichtungsträger ist somit nicht nur körperlich, sondern auch funktional in den Stutzen bzw. dessen erstes Außengewinde integriert. Der Dichtungsträger ist dabei der Teil des Stutzens, der bei einer Druckbeaufschlagung durch das Druckelement radial nach innen gedrückt wird und die Dichtung auf den Kabelmantel oder die Außenseite eines Schlauches drückt. Der Dichtungsträger ist entweder vom verwendeten Material her und/oder von der formalen Ausgestaltung her so ausgebildet, dass er bei einer Druckbeaufschlagung durch das Druckelement plastisch oder elastisch radial nach innen verformt werden kann. Es ist denkbar, dass der Dichtungsträger und die eigentliche Dichtung als ein integrales Bauteil ausgebildet sind.

Bei der erfindungsgemäßen Kabel- oder Schlauchverschraubung ist der Dichtungsträger integraler Bestandteil des Stutzens, wodurch die Anzahl der Bauteile verringert wird, was insbesondere Vorteile bei der Fertigung, dem Transport und der Montage der Verschraubung mit sich bringt. Dabei bleibt die volle Funktionalität einer Kabel- oder Schlauchverschraubung, insbesondere eine Zugentlastung des hindurchgeführten Kabels und eine Abdichtung der Kabeldurchführung, in vollem Umfang erhalten.

Die Formulierung "integraler Bestandteil" umfasst im Sinne der vorliegenden Erfindung zunächst einmal den Fall, wo der Stutzen und der Dichtungsträger als das gleiche Bauteil aus ein und demselben Material bestehen, wobei einem Bereich des Stutzens die Funktion des Dichtungsträgers zukommt. Dazu muss dieser Bereich des Stutzens in entsprechender Weise ausgebildet sein, so dass er an seiner Innenseite die Dichtung aufnehmen kann und dass er durch Aufschrauben des Druckelements auf den Stutzen radial nach innen gedrückt wird und die Dichtung auf den Mantel des durch die Verschraubung hindurchgeführten Kabels oder Schlauchs drückt.

Die Formulierung "integraler Bestandteil" umfasst aber auch die Fälle, in denen der Stutzen und der Dichtungsträger zunächst als separate Teile ausgebildet sind, aber noch im Rahmen der Fertigung unlösbar miteinander verbunden werden, so dass ein einziges Bauteil entsteht, welches den Stutzen und die Funktion des Dichtungselements in sich vereint. Diese Ausführung hat den Vorteil, dass die Materialien von Stutzen und Dichtungsträger in optimaler Weise auf die ihnen jeweils zukommende Funktion abgestimmt werden können. So kann bspw. der Stutzen aus einem stabilen und widerstandsfähigen Material (einem ersten Metall oder Kunststoff) gefertigt sein, wohingegen der Dichtungsträger eher aus einem elastisch verformbaren Material (einem zweiten Metall oder Kunststoff) gefertigt ist. Die unlösbare Verbindung zwischen Dichtungsträger und Stutzen kann bspw. mittels Schweißen, Löten oder Kleben hergestellt werden.

Dadurch, dass der Dichtungsträger funktional in das erste Außengewinde integriert ist und bis in das erste Außengewinde hinein ragt, wird zudem ohne Einbußen in der Funktionalität die Länge der erfindungsgemäßen Kabel- oder Schlauchverschraubung reduziert, die Verschraubung also besonders kurzbauend ausgestaltet. Das bedeutet, dass die montierte Kabel- oder Schlauchverschraubung weniger weit von einem Gehäuse, an dem sie montiert ist, hervorsteht. Zudem kann die Kabel- oder Schlauchverschraubung auch an engen, schlecht zugänglichen Positionen montiert werden, wo der Einsatz einer Kabel- oder Schlauchverschraubung bisher nicht möglich war. Erfindungsgemäß wird also der Stutzen der Kabel- oder Schlauchverschraubung derart ausgebildet, dass die Funktion des Dichtungsträgers in den Stutzen integriert wird.

Die funktionale Integration des Dichtungsträgers in das erste Außengewinde lässt sich bspw. dadurch realisieren, dass auf der Außenseite des Teils des Stutzens, der als Dichtungsträger dient, zumindest ein Teil des ersten Außengewindes ausgebildet ist. Dieser Teil des Stutzens nimmt über das Außengewinde das Druckelement auf und wird bei Druckbeaufschlagung durch das Druckelement radial nach innen gedrückt.

Der Dichtungsträger ist vorzugsweise im Bereich des ersten Endes des Stutzens angeordnet. Gemäß einer vorteilhaften Weiterbildung der vorliegenden Erfindung wird vorgeschlagen, dass der Dichtungsträger mehrere um den Umfang des Stutzens verteilte, sich in axialer Richtung bis an das erste Ende des Stutzens erstreckende Lamellen umfasst. Die Lamellen werden durch das Aufschrauben des Druckelements auf den Stutzen radial nach innen bewegt und drücken die Dichtung gegen das durch die Verschraubung hindurchgeführte Kabel oder den hindurchgeführten Schlauch. Durch die Ausgestaltung des Dichtungsträgers mit Lamellen kann selbst ein relativ hartes, stabiles und widerstandsfähiges Material des Stutzens (Metall oder Kunststoff) durch die Wirkung des Druckelements plastisch oder elastisch verformt werden.

Gemäß einer bevorzugten Ausführungsform der Erfindung wird vorgeschlagen, dass das erste Außengewinde im Bereich des ersten Endes des Stutzens ausgebildet ist, und dass die Lamellen von dem ersten Ende des Stutzens bis in das Gewinde hinein reichen. Das erste Außengewinde dient vorzugsweise zur Aufnahme des Druckelements und tritt beim Aufschrauben des Druckelements auf den Stutzen mit einem Innengewinde des Druckelements in Eingriff. Gemäß dieser Ausführungsform reichen also die Lamellen bzw. die Aussparungen zwischen den Lamellen bis in das Gewinde hinein. Aufgrund der langen, weit in das Gewinde reichenden Lamellen entsteht eine große, weil besonders lange Druckfläche, welche bei Druckbeaufschlagung der Lamellen durch das Druckelement auf die Dichtung wirkt und diese auf den Kabelmantel oder den Schlauch drückt. Dadurch kann eine besonders hohe Zugentlastung erzielt werden.

Vorteilhafterweise ist mindestens ein Gewindegang des ersten Außengewindes an der Außenseite der Lamellen ausgebildet und geht dann über in den restlichen Teil des ersten Außengewindes, das an der Außenseite des Stutzens jenseits der Lamellen ausgebildet ist. Das erste Außengewinde ist funktional dem Stutzen zuzuordnen, wohingegen die Lamellen funktional dem Dichtungsträger zuzuordnen sind. Erfindungsgemäß werden nun die bisher streng getrennten Funktionen von Stutzen und Dichtungsträger zumindest teilweise vereint.

Vorzugsweise umfassen die Lamellen mindestens drei Gewindegänge des ersten Außengewindes. Je mehr Gewindegänge des ersten Außengewindes an der Außenseite der Lamellen ausgebildet sind, desto kürzer kann die erfindungsgemäße Verschraubung ausgebildet werden. Allerdings ist ein wirklich sicheres Aufschrauben des Druckelements auf den Stutzen nur in dem Teil des ersten Außengewindes gewährleistet, der an der Außenseite des Stutzens außerhalb der Lamellen ausgebildet ist. Da sich beim Aufschrauben des Druckelements auf den Stutzen die Lamellen jedoch hauptsächlich an ihren distalen Enden radial nach innen bewegen und die Bewegung der Lamellen an ihren Fußenden, an denen sie mit dem restlichen Stutzen in Verbindung stehen, relativ gering ist, kann selbst bei einem Eingriff des Innengewindes des Druckelements mit den ersten drei Gewindegängen des ersten Außengewindes des Stutzens, die an der Außenseite der Lamellen im Bereich der Fußenden ausgebildet sind, noch ein sicherer und zuverlässiger Halt des Druckelements auf dem Stutzen gewährleistet werden.

Vorteilhafterweise weisen die Lamellen an dem ersten Ende des Stutzens radial nach innen gerichtete Vorsprünge auf. Diese Vorsprünge liegen vorzugsweise außerhalb der an der Innenseite des Dichtungsträgers angeordneten Dichtung und drücken beim Aufschrauben des Druckelements auf den Stutzen von außen in den Kabelmantel oder in die Außenseite des Schlauchs, wobei sie sich sogar in den Mantel oder Schlauch eingraben oder sich darin festkrallen können. Die Vorsprünge sorgen so für eine zusätzliche Sicherung des Kabels oder des Schlauchs in der Verschraubung. Zusätzlich zu der Sicherung des Kabels oder des Schlauchs in der Verschraubung mittels Reibschluss zwischen der Dichtung und der Außenseite des Kabels oder des Schlauchs bewirken die Vorsprünge also eine Sicherung des Kabels oder des Schlauchs in der Verschraubung mittels Formschluss. Auf diese Weise kann mit der erfindungsgemäßen Kabel- oder Schlauchverschraubung eine besonders hohe Zugentlastung erzielt werden.

Gemäß einer anderen vorteilhaften Weiterbildung der vorliegenden Erfindung wird vorgeschlagen, dass die Dichtung hohlzylinderförmig ausgebildet ist und an der Innenseite des Stutzens zumindest teilweise im Bereich der Lamellen angeordnet ist. Durch eine Bewegung der Lamellen radial nach innen wird die Dichtung also auf die Außenseite des Kabels oder des Schlauchs gedrückt und bewirkt eine Abdichtung der Kabel- oder Schlauchdurchführung und ein sicheres Fixieren des Kabels oder des Schlauchs mittels Reibschluss.

Gemäß einer weiteren vorteilhaften Ausführungsform der vorliegenden Erfindung wird vorgeschlagen, dass die axiale Längserstreckung der Dichtung und der Lamellen derart aufeinander abgestimmt ist, dass der größere Teil der Längserstreckung der Dichtung im Bereich der Lamellen liegt.

Vorteilhafterweise ist an der Innenseite des Stutzens eine Aussparung zur Aufnahme der Dichtung ausgebildet. Die Tiefe der Aussparung ist vorzugsweise so gewählt, dass die Innenseite der Dichtung ohne Druckbeaufschlagung des Stutzens durch das Druckelement bündig in die Innenseite des Stutzens übergeht. Somit ergibt sich an der Innenseite der erfindungsgemäßen Verschraubung eine ebene zylinderförmige Fläche, durch die das Kabel oder der Schlauch bei der Montage der Verschraubung problemlos hindurchgeführt werden kann.

In besonders vorteilhafter Weise ist die Dichtung verliersicher an der Innenseite des Stutzens angeordnet.

Dadurch wird verhindert, dass beim Transport oder bei der Montage der erfindungsgemäßen Kabel- oder Schlauchverschraubung die Dichtung verloren geht, weil sie aus der Verschraubung herausrutscht oder von vorn herein als gesondertes Teil gehandhabt werden muss. Die Dichtung kann bspw. mittels Reibschluss verliersicher an der Innenseite des Stutzens gehalten sein. Alternativ oder zusätzlich kann die Dichtung durch die an dem ersten Ende des Stutzens an der Innenseite der Lamellen ausgebildeten, radial nach innen gerichteten Vorsprünge verliersicher an der Innenseite des Stutzens gehalten sein.

Die Lamellen sind vorteilhafterweise elastisch verformbar, so dass sie beim Lösen und Abnehmen des Druckelements von dem Stutzen wieder im wesentlichen in ihre Ausgangsposition ohne Druckbelastung zurückkehren und die lichte Weite im Inneren der Kabelverschraubung, wie sie ohne Druckbelastung durch das Druckelement bestand, wieder freigeben. Dadurch kann eine bereits montierte Verschraubung nochmals geöffnet und das Kabel oder der Schlauch darin beliebig längs verschoben werden. Darüber hinaus ist es möglich, die gleiche Verschraubung mehrmals zu verwenden. Der Stutzen kann aus einem beliebigen Metall, bspw. aus Messing, Edelstahl oder Aluminium bestehen. Vorzugsweise besteht der Stutzen jedoch aus einem Kunststoff, bspw. aus Polyamid. Das gleiche gilt für das Druckelement, das entweder aus Metall oder aus Kunststoff bestehen kann.

Ein wichtiger Aspekt der vorliegenden Erfindung ist die funktionale Integration von Dichtungsträger bzw. Lamellen und Stutzen bzw. erstem Außengewinde. Dies erlaubt zum einen eine besonders kurzbauende Ausführung der Verschraubung und führt zum anderen zu einer besonders hohen Zugentlastung.

Bevorzugte Ausführungsbeispiele der vorliegenden Erfindung werden anliegend anhand der Figuren näher erläutert. Durch die Figuren und die dazugehörige Figurenbeschreibung ergeben sich weitere Merkmale und Vorteile der vorliegenden Erfindung. Es zeigen:
- Figur 1: eine erfindungsgemäße Kabel- oder Schlauchverschraubung gemäß einer bevorzugten Ausführungsform in einer Seitenansicht teilweise im Schnitt;
- Figur 2: die Verschraubung aus Figur 1 in einer Ansicht von oben;

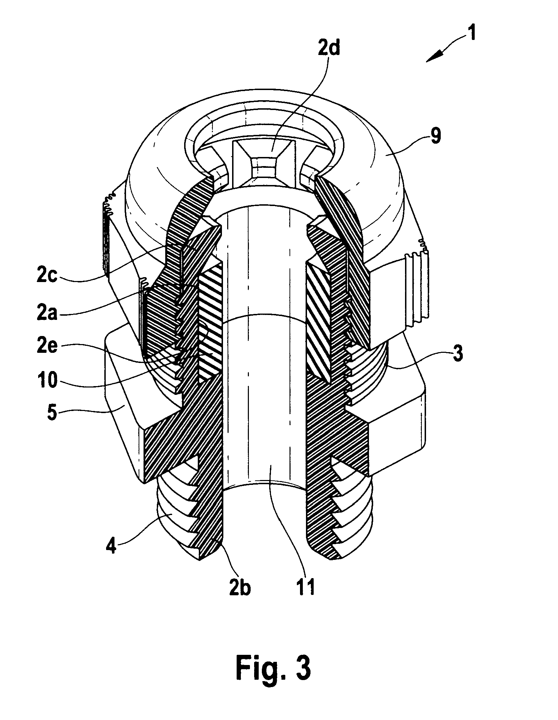

- Figur 3: die Verschraubung aus Figur 1 in einer perspektivischen Ansicht teilweise im Schnitt;
- Figur 4: einen Stutzen einer erfindungsgemäßen Kabel- oder Schlauchverschraubung in einer Seitenansicht teilweise im Schnitt;
- Figur 5: den Stutzen aus Figur 4 in einer Ansicht von oben; und
- Figur 6: den Stutzen aus Figur 4 in perspektivischer Ansicht, teilweise im Schnitt.

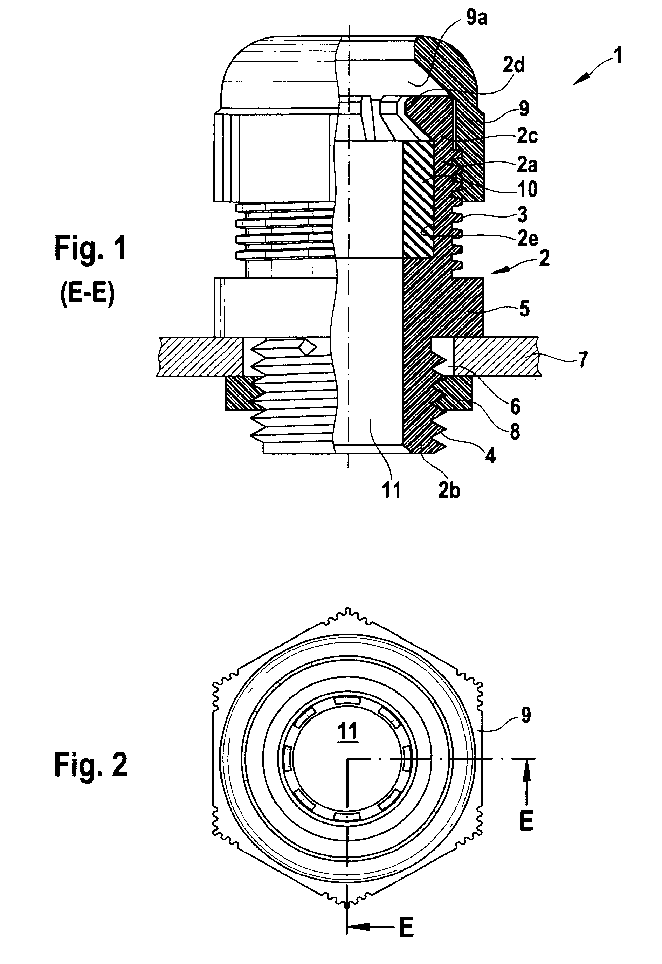

In Figur 1 ist eine erfindungsgemäße Kabel- oder Schlauchverschraubung in ihrer Gesamtheit mit dem Bezugszeichen 1 bezeichnet. Die Verschraubung 1 umfasst einen hohlzylinderförmigen Stutzen 2 aus Kunststoff, vorzugsweise aus Polyamid. Selbstverständlich kann der Stutzen 2 auch aus einem anderen Material, bspw. aus Metall, vorzugsweise aus Messing, Edelstahl oder Aluminium bestehen. Der Stutzen 2 umfasst im Bereich seines ersten Endes 2a ein erstes Außengewinde 3 und im Bereich seines zweiten Endes 2b ein zweites Außengewinde 4. Zwischen den beiden Gewinden 3, 4 ist ein Kragen 5 ausgebildet. Zur Montage wird der Stutzen 2 mit seinem zweiten Ende 2b in eine Öffnung 6 einer Wand 7 eines Gehäuses so weit eingeführt, bis der Kragen 5 an der Gehäusewand 7 zur Auflage kommt. Auf der dem Kragen 5 gegenüberliegenden Seite der Gehäusewand 7 wird eine Gegenmutter 8 auf das zweite Außengewinde 4 aufgeschraubt und die Verschraubung 1 so in der Gehäusewand 7 befestigt. Die Gegenmutter 8 besteht aus Kunststoff, vorzugsweise aus Polyamid. Selbstverständlich kann die Gegenmutter 8 auch aus einem anderen Material, bspw. aus Metall, vorzugsweise aus Messing, Edelstahl oder Aluminium bestehen.

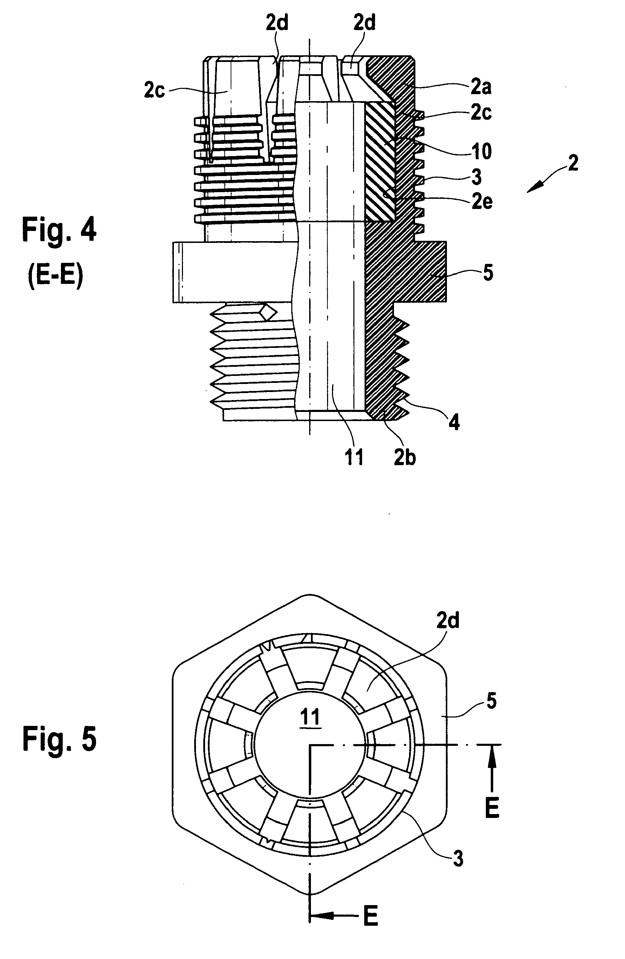

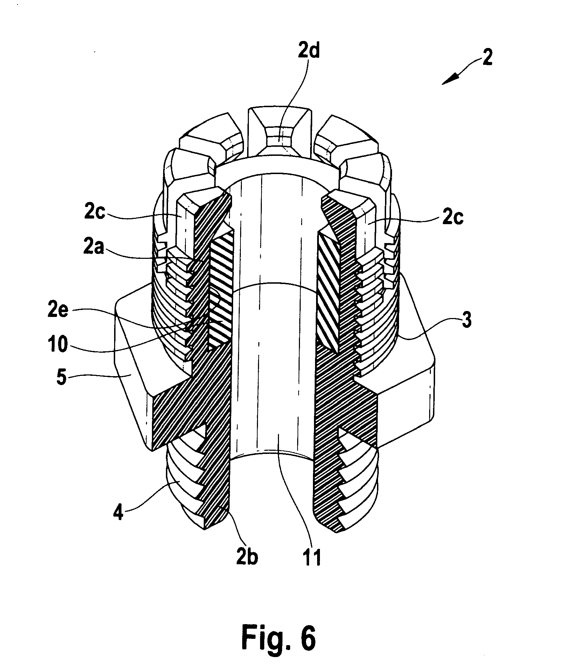

Auf das erste Ende 2a des Stutzens 2 ist ein Druckelement 9 aufschraubbar, wobei ein Innengewinde des Druckelements 9 mit dem ersten Außengewinde 3 des Stutzens 2 in Eingriff tritt. Das Druckelement 9 besteht aus Kunststoff, vorzugsweise aus Polyamid. Selbstverständlich kann das Druckelement 9 auch aus einem anderen Material, bspw. aus Metall, vorzugsweise aus Messing, Edelstahl oder Aluminium bestehen. Im Bereich des ersten Endes 2a des Stutzens 2 ist ein Dichtungsträger eines Dichtungselements integriert, an dessen Innenseite eine Dichtung 10 angeordnet ist. Die Dichtung 10 besteht vorzugsweise aus Gummi oder einem Kunststoff. Im Bereich des ersten Endes 2a des Stutzens 2 sind mehrere um den Umfang des Stutzens 2 verteilte, sich in axialer Richtung bis an das erste Ende des Stutzens 2 erstreckende Lamellen 2c ausgebildet. Die Lamellen 2c sind besser in den Figuren 4 bis 6 erkennbar. Die Lamellen 2c reichen von dem ersten Ende 2a des Stutzens bis in das erste Außengewinde 3 hinein. Die Lamellen 2c umfassen mehrere Gewindegänge, vorzugsweise mindestens 3 Gewindegänge, des ersten Außengewindes 3.

An dem ersten Ende 2a des Stutzens 2 bzw. an dem distalen Ende der Lamellen 2c sind radial nach innen gerichtete Vorsprünge 2d an den Lamellen 2c ausgebildet. Wenn sich die Lamellen 2c durch Druckbeaufschlagung durch das Druckelement 9 radial nach innen bewegen, drücken die Spitzen der Vorsprünge 2d auf den Mantel eines durch die Verschraubung 1 geführten Kabels oder die Außenseite eines hindurchgeführten Schlauches und können sich darin sogar eingraben oder festkrallen. Die Spitzen der Vorsprünge 2d sind vorzugsweise so ausgebildet, dass eine bleibende Beschädigung oder gar Zerstörung des Kabelmantels bzw. der Schlauchaußenseite nach Möglichkeit verhindert wird. Durch die Vorsprünge 2d kann eine deutlich höhere Zugentlastung erzielt werden als bei herkömmlichen Verschraubungen.

Das Druckelement 9 weist an seiner Innenseite eine Schräge, konusförmige Fläche 9a auf. Alternativ kann die Fläche 9a auch halbkugelähnlich (wie bspw.) in der DE 20 2004 019 698 U1 offenbart) oder anderweitig ausgebildet sein. Die Dichtung 10 ist in einer Aussparung 2e an der Innenseite des Stutzens 2 im Bereich der Lamellen 2c angeordnet. Die Tiefe der Aussparung 2e ist derart gewählt, dass die Innenseite der Dichtung 10 und die Innenseite des Stutzens 2 außerhalb der Aussparung 2e ohne Druckbelastung durch das Druckelement 9 bündig ineinander übergehen.

Im Inneren der Kabel- oder Schlauchverschraubung 1 ist eine im wesentlichen zylinderförmige Öffnung 11 zur Aufnahme des Kabels oder des Schlauchs (nicht dargestellt) ausgebildet. Die Öffnung 11 setzt sich im wesentlichen zusammen aus entsprechenden Öffnungen in dem Stutzten 2, in der Dichtung 10 und in dem Dichtelement 9. Vorzugsweise haben die Einzelöffnungen alle einen ähnlichen Durchmesser, so dass das Kabel oder der Schlauch ohne Druckbelastung durch das Druckelement 9 problemlos in die Öffnung 11 eingeführt werden kann.

Nach dem Einführen des Kabels oder des Schlauchs in die Öffnung 11 und nach einem Positionieren des Kabels oder des Schlauchs in der Verschraubung 1 wird das Druckelement 9 auf das erste Außengewinde 3 des Stutzens 2 aufgeschraubt. Nach einigen Gewindegängen, die vorzugsweise auf der Außenseite der Lamellen 2c ausgebildet sind, stößt die konische Fläche 9a an der Innenseite des Druckelements 9 gegen das distale Ende der Lamellen 9c. Durch die Schräge der Fläche 9a werden die Lamellen 2c beim weiteren Aufschrauben des Druckelements 9 auf das erste Außengewinde 3 des Stutzens 2 und die dadurch hervorgerufene Bewegung der Fläche 9a in axialer Richtung, also in Richtung der Längsachse der Verschraubung 1, radial nach innen in Richtung der Längsachse bewegt. Dabei verformen sich die Lamellen 2c elastisch, so dass sie nach einem Lösen und Abnehmen des Druckelements 9 von dem Stutzen 2 wieder in ihre ursprüngliche Position zurückkehren, die sie ohne Druckbelastung durch das Druckelement inne hatten. Wenn sich die Lamellen 2c radial nach innen bewegen, bewegen sich auch die auf der Außenseite der Lamellen 2c ausgebildeten Gewindegänge radial nach innen und lösen sich ein wenig aus dem Innengewinde des Druckelements 9. Ein sicherer Eingriff zwischen dem ersten Außengewinde 3 des Stutzens 2 und dem Innengewinde des Druckelements 9 ist jedoch nach wie vor gewährleistet, da das Innengewinde - zum Zeitpunkt der Bewegung der Lamellen 2c radial nach innen - nicht nur über die an der Außenseite der Lamellen 2c ausgebildeten Gewindegänge, sondern auch über die an der Außenseite des übrigen Stutzens 2 ausgebildeten weiteren Gewindegänge des Außengewindes 3 geführt und gehalten ist.

Die Bewegung der Lamellen 2c radial nach innen wird auf die Dichtung 10 übertragen, die sich ebenfalls radial nach innen in Richtung der Längsachse der Verschraubung 1 bewegt. Auch die Verformung der Dichtung 10 erfolgt elastisch, so dass sich die Dichtung 10 ohne Druckbeaufschlagung durch das Druckelement 9 ebenfalls wieder in ihre ursprüngliche Position zurückbewegt. Das Druckelement 9 wird so weit auf das erste Außengewinde des Stutzens 2 aufgeschraubt, bis die Dichtung 10 mit ihrer Innenseite fest an der Außenseite des Kabels oder des Schlauchs anliegt. Dadurch wird das Kabel oder der Schlauch durch die Dichtung 10 mittels Reibschluss in der gewünschten Position in der Verschraubung 1 fixiert. Zusätzlich bewirkt die Dichtung 10 ein Abdichten der Kabeldurchführung. Insbesondere wird durch die Dichtung 10 eine Abdichtung zwischen dem Stutzen 2 und der Außenseite des Kabels oder des Schlauches bewirkt. Eine Abdichtung zwischen dem Stutzen 2 und der Gehäusewand 7 wird durch das flächige Aufliegen des Kragens 5 auf einer Seite der Gehäusewand 7 erzielt. Zusätzlich können noch Dichtungselemente bspw. in Form eines Dichtringes zwischen dem Kragen 5 und der Gehäusewand 7 vorgesehen sein.

Durch die Bewegung der Lamellen 2c radial nach innen liegen die Vorsprünge 2d auf der Außenseite des Kabels oder des Schlauches an und werden unter Umständen sogar in den Mantel oder die Isolation des Kabels oder in die Außenfläche des Schlauches eingedrückt, so dass das Kabel oder der Schlauch zusätzlich zu der reibschlüssigen Fixierung durch die Dichtung 10 auch formschlüssig durch die Vorsprünge 2d in der Verschraubung 1 fixiert ist. Durch die erfindungsgemäße Verschraubung 1 mit dem in den Stutzen 2 integrierten Dichtungsträger bzw. den in den Stutzen 2 integrierten Lamellen 2c ergibt sich eine besonders kurzbauende Verschraubung, das heißt die Erstreckung der Verschraubung 1 in ihrer Längsachse ist relativ kurz. Zudem ergibt sich durch die besondere Ausgestaltung der Lamellen 2c, insbesondere durch die an der Innenseite der Lamellen 2c vorgesehenen Vorsprünge 2d eine besonders sichere Fixierung des Kabels bzw. des Schlauches in der Verschraubung 1, da ein hoher Druck auf den Außenmantel des Kabels bzw. auf die Außenseite des Schlauches ausgeübt werden kann. Das wiederum resultiert in einer extrem hohen Zugentlastung.

Eine weitere Besonderheit der erfindungsgemäßen Verschraubung sind die relativ langen bis weit in das erste Außengewinde 3 reichenden Lamellen 2c, die dazu führen, dass die Dichtung 10 über einen insbesondere in Längsrichtung betrachtet relativ großen Bereich auf der Außenseite des Kabels bzw. des Schlauches aufliegt.

Die Lamellen 2c erstrecken sich von dem ersten Ende 2a des Stutzens 2 bis in das erste Außengewinde 3 hinein. Die Lamellen 2c umfassen mehrere Gewindegänge des ersten Außengewindes 3. Bei dem in Figur 4 dargestellten Ausführungsbeispiel eines Stutzens 2 sind drei Gewindegänge an der Außenseite der Lamellen 2c ausgebildet, welche dann in die restlichen Gewindegänge des Außengewindes 3, die auf der Außenseite des Stutzens 2 außerhalb der Lamellen 2c ausgebildet sind, übergehen. Mit anderen Worten, sind die ersten 3 Gewindegänge des ersten Außengewindes 3 des Stutzens 2 durch zwischen den Lamellen 2c ausgebildete Aussparungen unterbrochen. Beim Aufschrauben und Anziehen des Druckelements 9 auf den Stutzen 2 und bei der daraus resultierenden Bewegung der Lamellen 2c radial nach innen bewegen sich selbstverständlich auch die an der Außenseite der Lamellen 2c ausgebildeten oberen drei Gewindegänge des Außengewindes 3 radial nach Innen. Die Bewegung der ersten drei Gewindegänge ist jedoch relativ gering, so dass selbst bei nach innen verformten Lamellen 2c ein ausreichend sicherer und zuverlässiger Halt des Druckelements 9 auf dem Stutzen 2 sichergestellt werden kann. Insbesondere durch diese Integration der Lamellen 2c in das erste Außengewinde 3 des Stutzens 2 kann die erfindungsgemäße Kabel- bzw. Schlauchverschraubung besonders kurzbauend ausgebildet werden. Selbstverständlich können auch mehr, aber auch weniger als die dargestellten drei Gewindegänge des Außengewindes 3 an der Außenseite der Lamellen 2c ausgebildet sein.

Die Dichtung 10 ist verliersicher in der Aussparung 2e angeordnet. Die Verliersicherung ergibt sich dabei durch einen Reibschluss zwischen der Außenseite der Dichtung 10 und der Innenseite der Lamellen 2c. Zusätzlich können auch die Vorsprünge 2d die Dichtung 10 im Inneren des Stutzens 2 in der Aussparung 2e halten.

## Patentansprüche

1. Kabel- oder Schlauchverschraubung (1) umfassend einen mit einem Gehäuse (7) verbindbaren, im wesentlichen hohlzylinderförmigen Stutzen (2), ein über ein erstes Außengewinde (3) des Stutzens (2) mit diesem verschraubbares Druckelement (9) und ein Dichtungselement mit einem im wesentlichen hohlzylinderförmigen Dichtungsträger und einer an der Innenseite des Dichtungsträgers angeordneten Dichtung (10), wobei das Druckelement (9) auf den Dichtungsträger im Sinne eines Anliegens der Dichtung (10) an ein durch die Verschraubung (1) hindurchgeführtes Kabel oder an einen durch die Verschraubung (1) hindurchgeführten Schlauch einwirkt, **dadurch gekennzeichnet, dass** der Dichtungsträger in das erste Außengewinde (3) des Stutzens (2) funktional integriert ist.

2. Verschraubung (1) nach Anspruch 1, **dadurch gekennzeichnet, dass** der Dichtungsträger an einem ersten Ende (2a) des Stutzens (2) ausgebildet ist und mehrere um den Umfang des Stutzens (2) verteilte, sich in axialer Richtung bis an das erste Ende (2a) des Stutzens (2) erstreckende Lamellen (2c) umfasst.

3. Verschraubung (1) nach Anspruch 2, **dadurch gekennzeichnet, dass** das erste Außengewinde (3) im Bereich des ersten Endes (2a) des Stutzens (2) ausgebildet ist und dass die Lamellen (2c) von dem ersten Ende (2a) des Stutzens (2) bis in das Außengewinde (3) reichen.

4. Verschraubung (1) nach Anspruch 2 oder 3, **dadurch gekennzeichnet, dass** die Lamellen (2c) mehrere Gewindegänge des ersten Außengewindes (3) umfassen.

5. Verschraubung (1) nach einem der Ansprüche 2 bis 4, **dadurch gekennzeichnet, dass** die Lamellen (2c) an dem ersten Ende (2a) des Stutzens (2) radial nach innen gerichtete Vorsprünge (2d) aufweisen.

6. Verschraubung (1) nach einem der Ansprüche 1 bis 5, **dadurch gekennzeichnet, dass** die Dichtung (10) hohlzylinderförmig ausgebildet ist und an der Innenseite des Stutzens (2) zumindest teilweise im Bereich der Lamellen (2c) angeordnet ist.

7. Verschraubung (1) nach Anspruch 6, **dadurch gekennzeichnet, dass** die axiale Längserstreckung der Dichtung (10) und der Lamellen (2c) derart aufeinander abgestimmt ist, dass der größere Teil der Längserstreckung der Dichtung (10) im Bereich der Lamellen (2c) angeordnet ist.

8. Verschraubung (1) nach Anspruch 6 oder 7, **dadurch gekennzeichnet, dass** an der Innenseite des Stutzens (2) eine Aussparung (2e) zur Aufnahme der Dichtung (10) ausgebildet ist.

9. Verschraubung (1) nach Anspruch 8, **dadurch gekennzeichnet, dass** die Tiefe der Aussparung (2e) so gewählt ist, dass die Innenseite der Dichtung (10) ohne Druckbeaufschlagung des Stutzens (2) durch das Druckelement (9) bündig in die Innenseite des Stutzens (2) übergeht.

10. Verschraubung (1) nach einem der Ansprüche 1 bis 9, **dadurch gekennzeichnet, dass** die Dichtung (10) verliersicher an der Innenseite des Stutzens (2) angeordnet ist.

11. Verschraubung (1) nach Anspruch 10, **dadurch gekennzeichnet, dass** die Dichtung (10) mittels Reibschluss verliersicher an der Innenseite des Stutzens (2) gehalten ist.

12. Verschraubung (1) nach Anspruch 5, **dadurch gekennzeichnet, dass** die Dichtung (10) durch die Vorsprünge (2d) verliersicher an der Innenseite des Stutzens (2) gehalten ist.

13. Verschraubung (1) nach einem der Ansprüche 2 bis 12, **dadurch gekennzeichnet, dass** die Lamellen (2c) zumindest radial nach innen elastisch verformbar sind.

14. Verschraubung (1) nach einem der Ansprüche 1 bis 13, **dadurch gekennzeichnet, dass** der Stutzen (2) aus Kunststoff, insbesondere aus Polyamid, besteht.

15. Verschraubung (1) nach einem der Ansprüche 1 bis 13, **dadurch gekennzeichnet, dass** der Stutzen (2) aus Metall, insbesondere aus Messing, besteht.
